# EUROPEAN PATENT SPECIFICATION

(11) **EP 3 415 309 B1**
(45) Date of publication and mention of the grant of the patent: **14.04.2021**
(21) Application number: 17750416.4
(22) Date of filing: 06.02.2017
(51) Int. Cl.: B32B 7/02, A45D 33/34, A45D 34/04, A45D 40/00, A45D 40/26, A45D 33/36

(54) **COSMETIC TOOL WITH IMPROVED TRANSFERRING PERFORMANCE**
KOSMETISCHES WERKZEUG MIT VERBESSERTER ÜBERTRAGUNGSLEISTUNG
OUTIL COSMÉTIQUE À PERFORMANCE DE TRANSFERT AMÉLIORÉE

(30) Priority: 12.02.2016 KR 20160016413
(43) Date of publication of application: 19.12.2018
(73) Proprietor: Amorepacific Corporation, Seoul 04542 (KR)
(72) Inventor: CHOI, Jung Sun, Yongin-si, Gyeonggi-do 17074 (KR)
(74) Representative: Vossius & Partner Patentanwälte Rechtsanwälte mbB
(86) International application number: PCT/KR2017/001281
(87) International publication number: WO 2017/138724

(56) References cited:
- WO-A2-2009/137277
- JP-A- H09 164 017
- JP-A- H10 313 938
- JP-A- 2014 050 439
- KR-B1- 101 295 166
- KR-B1- 101 406 292
- KR-B1- 101 406 292
- US-A1- 2013 343 797

## Description

### [Technical Field]

The present invention relates to a cosmetic tool with improved delivery properties.

### [Background Art]

A cosmetic tool is used in delivering a cosmetic material to the skin, particularly the facial skin. Characteristics of the cosmetic tool are important which deliver the cosmetic material to the skin in a suitable amount after properly absorbing a cosmetic material.

Remaining of the cosmetic material in the cosmetic tool after makeup may cause sanitary and appearance problems. These problems become more problematic in a cosmetic tool made of a foam which delivers a low viscosity cosmetic material to the skin. US 2013/343797 A1 discloses a sanitary, hand-held, on demand, single-use combination liquid container and applicator which comprises a reservoir-handle element defining a volume, a film securely and permanently coupled to the perimeter of the dispensing end of the reservoir-handle, and a flat absorbent pad securely and permanently sealed to an opposing side of a non-forming thermoplastic film.

### [Disclosure]

### [Technical Problem]

Therefore, the purpose of the present invention is to provide a cosmetic tool with improved delivery properties.

### [Technical Solution]

The purpose of the present invention is achieved by a cosmetic tool comprising: a skin contact layer which absorbs a cosmetic material and delivers the absorbed cosmetic material to a skin; and an elastic layer which is formed to face the skin contact layer and pressurizes the skin contact layer to the skin according to physical pressurization from the rear side, wherein the elastic layer includes first regions having a first applied pressure and second regions having a second applied pressure which is lower than the first applied pressure, wherein
the first regions are protruded toward the skin contact layer compared to the second regions, and
a portion of the skin contact layer corresponding to the second regions has a lower cosmetic material absorbing power than the periphery thereof.

The first regions may have a higher strength than the second regions.

The skin contact layer and the elastic layer may be integrally formed.

The skin contact layer and the elastic layer may be a separate layer.

The first regions and the second regions may have different thermal histories.

The portion of the skin contact layer corresponding to the second regions may be blocked by heat.

The skin contact layer may have a portion corresponding to the first regions and the portion may be thinner than the periphery thereof.

The cosmetic tool may further comprise a band-shaped handle band which is positioned in rear of the elastic layer, and which enables fingers of a user to be inserted and fixed along with the elastic layer, wherein the first regions may be formed to have a lower density than the periphery thereof at a position corresponding to the fingers of the user.

The first regions may be extended lengthwise in a direction perpendicular to an extension direction of the handle band.

The first regions may have a protruding height which is 10 to 100% of thickness of the skin contact layer.

Disclosed is a cosmetic tool comprising: a skin contact layer which absorbs a cosmetic material and delivers the absorbed cosmetic material to a skin; and an elastic layer which is formed to face the skin contact layer and pressurizes the skin contact layer to the skin according to physical pressurization from the rear side, wherein the elastic layer includes a plurality of regions having different degrees of modifying the skin contact layer.

Disclosed is a cosmetic tool comprising: a skin contact layer which absorbs a cosmetic material and delivers the absorbed cosmetic material to a skin; and an elastic layer which is formed to face the skin contact layer and pressurizes the skin contact layer to the skin according to physical pressurization from the rear side, wherein the elastic layer includes a plurality of portions having different delivery properties during pressurization of the elastic layer.

### [Advantageous Effects]

A cosmetic tool with improved delivery properties according to the present invention is provided.

### [Description of Drawings]

FIG. 1 is a perspective view of a cosmetic tool according to a first embodiment of the present invention.
FIG. 2 is a cross-section along II-II' of FIG. 1.
FIG. 3 shows an arrangement of first regions in the cosmetic tool according to the first embodiment of the present invention.
FIG. 4a and FIG. 4b show operations of the cosmetic tool according to the first embodiment that does not form part of the present invention.
FIG. 5 and FIG. 6 show other arrangements of the first regions in the present invention.
FIG. 7 to FIG. 12 each show cosmetic tools according to a second embodiment to a seventh embodiment that do not form part of the present invention.

### [Mode for Invention]

Preferred embodiments of the present invention will be described below in more detail in connection with the appended drawings.

The present invention may, however, be embodied in different forms and should not be constructed as limited to the embodiments set forth herein. Rather, these embodiments are provided so that this disclosure will be thorough and complete, and will fully convey the scope of the present invention to those skilled in the art.

Although a puff is exemplified as a cosmetic tool in the following description, the present invention is not limited thereto, but is applied to all cosmetic tools absorbing and delivering the cosmetic material. Further, although a low viscosity cosmetic material is exemplified and described, the present invention is not limited thereto, but is applied to all cosmetic materials formed in a powder phase, a solid phase and a mixed phase thereof.

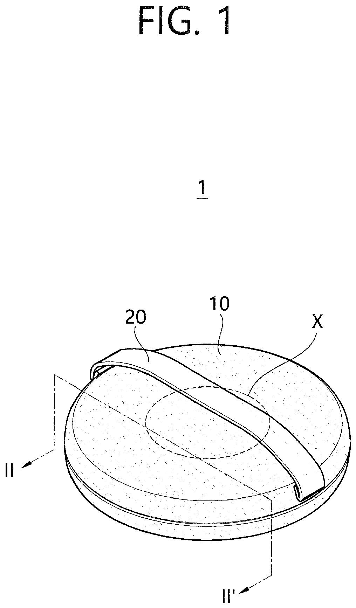

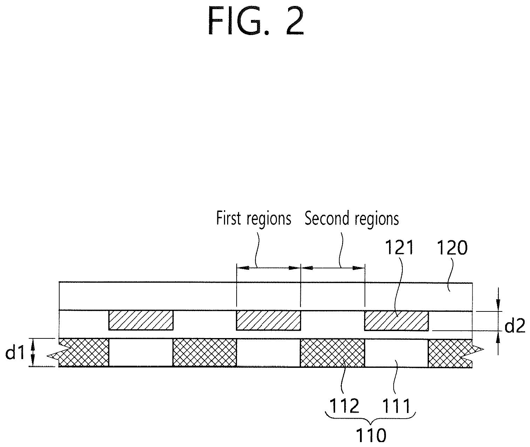

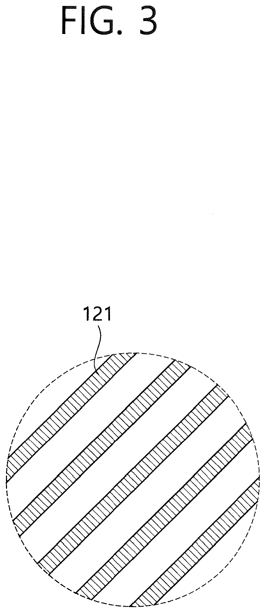

FIG. 1 is a perspective view of a cosmetic tool according to a first embodiment of the present invention, FIG. 2 is a cross-section along II-II' of FIG. 1, and FIG. 3, as a drawing showing an arrangement of first regions in the cosmetic tool according to the first embodiment of the present invention, illustrates a portion corresponding to 'X' of FIG. 1.

The cosmetic tool 1 may be also referred to as a puff, and includes a main body 10 and a handle band 20. The main body 10 is formed in a flat and round shape and has elasticity.

The handle band 20 is formed across the main body 10 and may be made of a fabric material and/or an elastic resin material. However, the handle band 20 is not limited thereto.

The main body 10 includes a skin contact layer 110 and an elastic layer 120. The skin contact layer 110 and the elastic layer 120 have approximately equal shapes and sizes, and may be coupled to each other along the edges thereof by a method such as thermal bonding, ultrasonic welding or the like.

The skin contact layer 110 plays a role of absorbing a cosmetic material and delivering the cosmetic material to the skin. The skin contact layer 110 has first portions 111 and second portions 112 formed therein, and the second portions 112 have a relatively low absorbing power of the cosmetic material compared to the first portions 111.

For instance, it is possible to include a method of making the first portions 111 and the second portions 112 using separate materials and bonding the first and second portions (111,112) as a method of forming the first portions 111 and the second portions 112. Alternatively, it is also possible to include a method of forming the skin contact layer 110 by sequentially disposing a composition for forming the first portions 111 and a composition for forming the second portions 112, making a base plate in which the first portions 111 and the second portions 112 are alternately arranged through processes of heating, polymerization and/or foaming and the like, and cutting the base plate as the method of forming the first portions 111 and the second portions 112.

Besides, it is also possible to include a method of forming the skin contact layer 110 by heat-treating or applying pressure to a region corresponding to the second portions 112 in the skin contact layer 110 as the method of forming the first portions 111 and the second portions 112. The second portions 112 obtained by heat treatment and the first portions may have different physical properties such as different densities, different average pore numbers, different pore sizes, different hardness values, and others. Particularly, a cosmetic material absorbing power of the second portions 112 is reduced as tissues of the second portions 112 become dense. Particularly, when the skin contact layer 110 is formed of a foam, pores are blocked by heat treatment such that the cosmetic material absorbing power is decreased. Thermal histories of the first portions 111 and the second portions 112 are different by heat treatment.

Although the second portions 112 are formed over the entire thickness d1 of the skin contact layer 110 in the present embodiment, the present invention is not limited thereto. In another embodiment, the second portions 112 may be formed only in a portion of the thickness d1 of the skin contact layer 110, and a formation height within the thickness d1 may be also diversely modified.

The skin contact layer 110 may be formed of a porous material, and may be particularly formed of a foam. Although a material for the skin contact layer 110 is not limited to the foam, the material for the skin contact layer 110 may include BR (butadiene rubber), SBR (styrene butadiene rubber), NR (natural rubber), wet urethane, dry urethane, polyether, polyester, polyvinyl chloride, polyethylene, EVA (ethylene vinyl acetate), latex, silicone, SIS (styrene isoprene styrene), SEBS (styrene ethylene butylene styrene), PVA (polyvinyl alcohol), silicone elastomer, nitrile rubber, butyl rubber, neoprene material, or a mixture thereof. Further, the skin contact layer 110 itself may be a multilayer structure formed of the same material or different materials.

The elastic layer 120 is positioned in rear of the skin contact layer 110, and is divided into first regions and second regions. The first regions have protrusion units 121 formed therein such that the protrusion units 121 are protruded toward the skin contact layer 110. The elastic layer 120 may be entirely formed in an integral form, or may be formed by coupling the protrusion units 121 formed of the same material or different materials. When the protrusion units 121 are formed of the different materials, materials having relatively high strength values may be used.

The first regions having the protrusion units 121 formed therein corresponds to the first portions 111, and the second regions corresponds to the second portions 112.

In the makeup process, the elastic layer 120 pressurizes the skin contact layer 110 such that the cosmetic material is delivered to the skin. During pressurization of the skin contact layer 110, the first regions having the protrusion units 121 formed therein provides the skin contact layer 110 with a stronger applied pressure than the second regions. Accordingly, a cosmetic material contained in the first portions 111 of the skin contact layer 110 is easily delivered to the skin such that the cosmetic material remaining in the first portions 111 is reduced. On the other hand, since there is not a large amount of an absorbed cosmetic material in the second portions 112 receiving a relatively weak applied pressure, there is not also a large amount of the cosmetic material remaining in the second portions 112.

The protrusion units 121 may have a thickness d2 corresponding to 10 to 100% of a thickness d1 of the skin contact layer 110. More specifically, the protrusion units 121 may have the thickness d2 corresponding to 20 to 70%, 20 to 60% or 30 to 60% of the thickness d1 of the skin contact layer 110. When the protrusion units 121 have the thickness d2 corresponding to less than 10% of the thickness d1 of the skin contact layer 110, there is a problem that an applied pressure is not sufficient. Usage feeling may be deteriorated, and entire shape design of the cosmetic tool 1 may be affected since a user can feel the protrusion units 121 during using when the protrusion units 121 have the thickness d2 corresponding to 100% or more of the thickness d1 of the skin contact layer 110.

The elastic layer 120 may be formed of a natural rubber, a synthetic rubber, a synthetic resin or the like, and may be particularly formed of a foam. Although a material for the elastic layer 120 is not limited to the foam, the material for the elastic layer 120 may include BR (butadiene rubber), SBR (styrene butadiene rubber), NR (natural rubber), wet urethane, dry urethane, polyether, polyester, polyvinyl chloride, polyethylene, EVA (ethylene vinyl acetate), latex, silicone, SIS (styrene isoprene styrene), SEBS (styrene ethylene butylene styrene), PVA (polyvinyl alcohol), silicone elastomer, nitrile rubber, butyl rubber, neoprene material, or a mixture thereof. Further, the elastic layer 120 itself may be a multilayer structure formed of the same material or different materials.

The first regions are extended lengthwise to be parallel to each other as in FIG. 3. An extension direction of the first regions may be a direction perpendicular to a longitudinal direction of the handle band 20. The first portions 111 and the second portions 112 of the skin contact layer 110 are alternately extended lengthwise to correspond to an arrangement of the first regions.

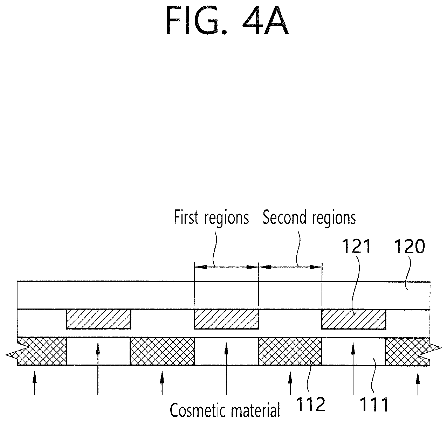

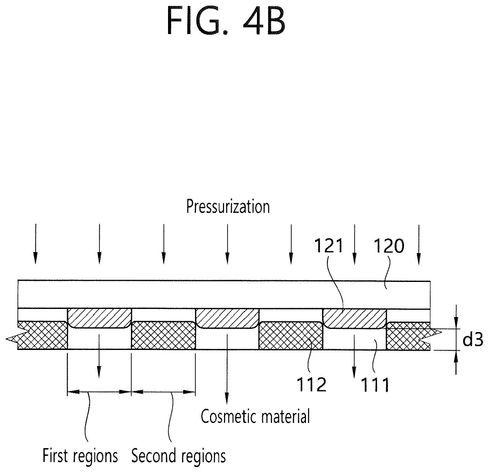

Hereinafter, operation of a cosmetic tool according to a first embodiment which is not part of the present invention is described with reference to FIG. 4a and FIG. 4b.

First, the cosmetic material is absorbed into the skin contact layer 110 by pressurizing the cosmetic tool 1 toward a cosmetic material contained in a cosmetic material case or the like as in FIG. 4a. At this time, the cosmetic material may be formed in the form of a low viscosity cosmetic material.

In absorption of the cosmetic material, a larger amount of the cosmetic material is absorbed into the first portions 111 having a high absorbing power than the second portions 112 having a low absorbing power.

After absorption of the cosmetic material, the cosmetic material is delivered to the skin by applying a physical pressure from the rear side of the elastic layer 120 as shown in FIG. 4b. The physical pressure may be usually applied by fingers and/or palm of the user.

At this time, the protrusion units 121 enables the first portions 111 including most of the cosmetic material to receive a higher applied pressure than the second portions 112, and delivery of the cosmetic material to the skin is easily performed accordingly.

In the process, thickness d3 of the first portions 111 is reduced, and a reduction degree of the thickness d3 of the first portions 111 is greater than that of the second portions 112. Although they are not illustrated, the second portions 112 are brought into contact with the second regions such that the second portions 112 may be also modified. A thickness reduction degree ((initial thickness-thickness after pressurization)/initial thickness) of the first portions 111 may be 1.5 time or more of that of the second portions 112. More specifically, the thickness reduction degree of the first portions 111 may be 1.5 to 20 times, 1.5 to 10 times, 1.5 to 5 times, 3 to 20 times, 3 to 10 times, or 3 to 5 times of that of the second portions 112.

According to the present invention, delivery properties of the cosmetic material are improved by selectively applying a high applied pressure to the first portions 111 including the cosmetic material. That is, cosmetic material delivery properties of the first portions 111 and the second portions 112 are different. Accordingly, the cosmetic material remaining in the first portions 111 is reduced. The effect of the applied pressure on the amount of the remaining cosmetic material is insignificant since there is a small amount of the absorbed cosmetic material in the second portions 112 to which a relatively low applied pressure is applied. Accordingly, a problem that the cosmetic tool 1, particularly the skin contact layer 110 is contaminated by the remaining cosmetic material is greatly reduced.

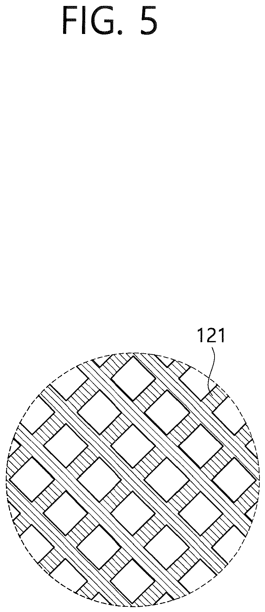

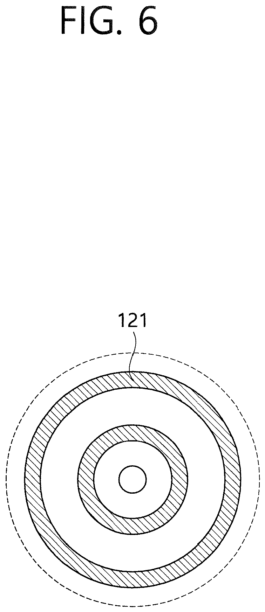

The above-described first embodiment of the present invention may be diversely modified. For example, an arrangement of the first regions corresponding to FIG. 3 may be a lattice shape as in FIG. 5, and may be a plurality of concentric circles as in FIG. 6. Arrangements of the first portions 111 and the second portions 112 of the skin contact layer 110 are also changed according to the arrangement of the first regions.

Meanwhile, the first regions and the first portions 111 may not completely correspond to each other, and the present invention includes all of the first regions and the first portions 111 even in this case.

Hereinafter, other embodiments that are not part of the present invention will be described.

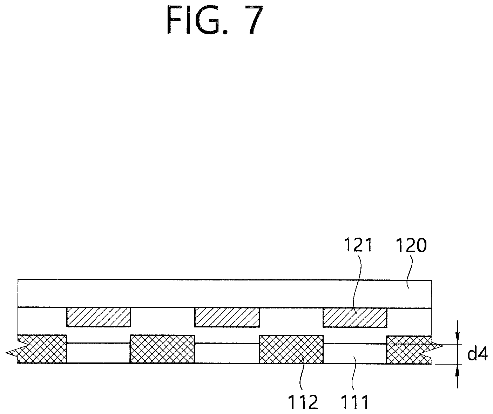

FIG. 7 to FIG. 12 each show cosmetic tools according to a second embodiment to a seventh emodiment of the present invention.

In a second embodiment shown in FIG. 7, the first portions 111 have a thickness d4 thinner than the periphery thereof. The first portions 111 may have the thickness d4 corresponding to 50 to 90% of that of the periphery thereof. Since the thickness d4 of the first portions 111 is thin, delivery properties are improved by applying an applied pressure to the first portions 111 more effectively.

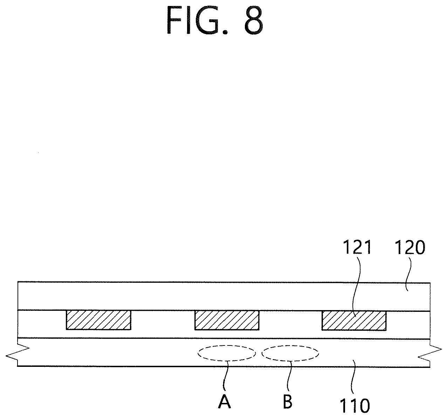

In a third embodiment shown in FIG. 8, the skin contact layer 110 has the same thickness and the same absorbing power. According to the third embodiment, manufacturing costs of the skin contact layer 110 can be reduced. A portions corresponding to the first regions have improved delivery properties compared to B portions corresponding to the second regions, and delivery properties of the skin contact layer 110 are improved as a whole.

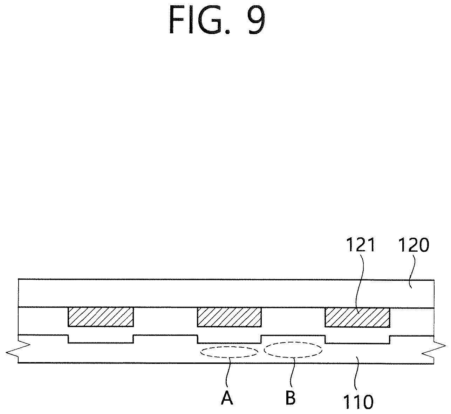

In a fourth embodiment shown in FIG. 9, although the skin contact layer 110 has the same absorbing power, the A portions corresponding to the first regions have a thickness thinner than the periphery thereof. The A portions corresponding to the first regions have improved delivery properties compared to the B portions corresponding to the second regions, and particularly the delivery properties are further improved by a reduced thickness of the A portions.

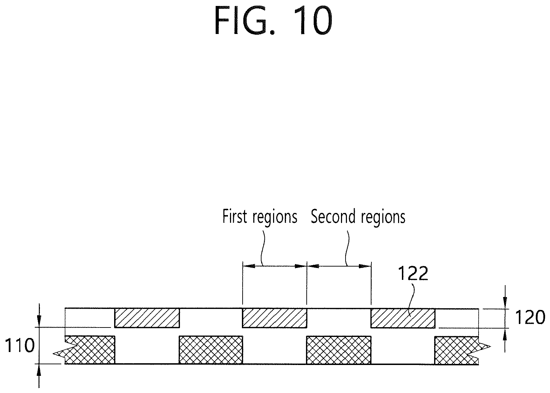

The skin contact layer 110 and the elastic layer 120 are integrally formed in a fifth embodiment shown in FIG. 10.

Hardness increasing units 122 are provided in the elastic layer 120, and regions in which the hardness increasing units 122 are formed become the first regions. The hardness increasing units 122, as portions having an increased hardness compared to the periphery thereof, performs a role such as that of the protrusion units 121 of the first embodiment. The first regions can give a high applied pressure to the skin contact layer 110 by the hardness increasing units 122 compared to the second regions. The hardness increasing units 122 can be formed by heat-treating to the elastic layer 120.

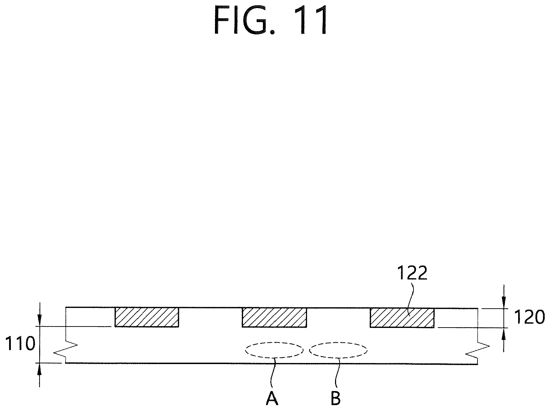

The skin contact layer 110 and the elastic layer 120 are integrally formed also in a sixth embodiment shown in FIG. 11. The skin contact layer 110 has the same thickness and the same absorbing power. According to the sixth embodiment, manufacturing costs of the skin contact layer 110 can be reduced, the A portions corresponding to the first regions have improved delivery properties compared to the B portions corresponding to the second regions, and delivery properties of the skin contact layer 110 are improved as a whole.

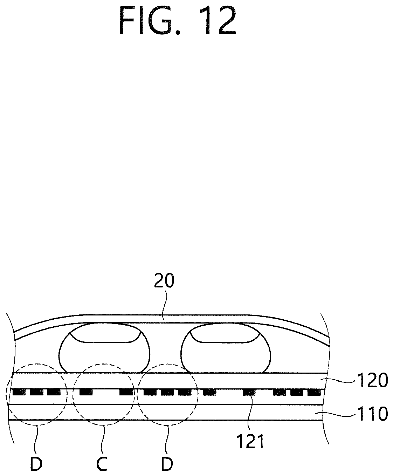

A seventh embodiment shown in FIG. 12 shows a portion corresponding to a cross-section along the handle band 20 in FIG. 1.

The user inserts fingers between the elastic layer 120 and the handle band 20 during makeup using the cosmetic tool 1. Generally, 2 or 3 fingers can be inserted between the elastic layer 120 and the handle band 20, and number and position of the fingers inserted can be adjusted by regulating size or the like of the cosmetic tool 1. Two fingers are symmetrically inserted into the center of the cosmetic tool 1 in the seventh embodiment illustrated in FIG. 12.

Regions corresponding to the fingers concentrically receive physical pressurization during delivering of the cosmetic material. The protrusion units 121 are concentrically arranged in regions D which do not correspond to the fingers in the seventh embodiment. That is, the protrusion units 121 are arranged a lower density in the regions C corresponding to the fingers than other regions D. The protrusion units 121 are extended lengthwise as in the first embodiment, and the protrusion units 121 may be extended along a longitudinal direction of the fingers, i.e., an extension direction of the protrusion units 121 may be a direction perpendicular to the extension direction of the handle band 20. Meanwhile, the 'density' in the present embodiment is not limited to the number per unit area of the first regions, but may include an area occupied by the first regions per unit area.

According to the seventh embodiment, delivery properties can be uniformly improved by concentrically arranging the first regions in portions to which an actual physical pressure is expected to be weakly applied. On the other hand, delivery performance can be further reinforced by concentrically arranging the first regions in portions to which the actual physical pressure is expected to be strongly applied in another embodiment.

Although the present invention has been described along with the accompanying drawings, this is only one of various examples including the gist of the present invention and has an object of enabling a person having ordinary skill in the art to easily practice the invention. Accordingly, it is evident that the present invention is not limited to the aforementioned examples, but is limited by the scope of the appended claims. Accordingly, the range of protection of the present invention should be interpreted based on the following claims. Furthermore, it is evident that the configurations of some drawings have been provided to more clearly describe configurations and have been more exaggerated or reduced than actual configurations.

## Claims

1. A cosmetic tool comprising:
a skin contact layer (110) which absorbs a cosmetic material and delivers the absorbed cosmetic material to a skin; and
an elastic layer (120) which is formed to face the skin contact layer (110) and pressurizes the skin contact layer (110) toward the skin according to physical pressurization from the rear side, wherein the elastic layer includes first regions having a first applied pressure and second regions having a second applied pressure which is lower than the first applied pressure, **characterized in that**
the first regions are protruded toward the skin contact layer (110) compared to the second regions, and
a portion of the skin contact layer (110) corresponding to the second regions has a lower cosmetic material absorbing power than the periphery thereof.

2. The cosmetic tool of claim 1, wherein the skin contact layer (110) and the elastic layer (120) are integrally formed.

3. The cosmetic tool of claim 1, wherein the skin contact layer (110) and the elastic layer (120) are a separate layer.

4. The cosmetic tool of claim 1, wherein the first regions and the second regions have different thermal histories.

5. The cosmetic tool of claim 1, wherein the portion of the skin contact layer (110) corresponding to the second regions is blocked by heat.

6. The cosmetic tool of claim 1, wherein the skin contact layer (110) has a portion corresponding to the first regions and the portion is thinner than the periphery thereof.

7. The cosmetic tool of claim 1, further comprising a band-shaped handle band (20) which is positioned in rear of the elastic layer (120), and which enables fingers of a user to be inserted and fixed with the elastic layer (120), wherein the first regions are formed to have a lower density than the periphery thereof at a position corresponding to the fingers of the user.

8. The cosmetic tool of claim 7, wherein the first regions are extended lengthwise in a direction perpendicular to an extension direction of the handle band (20).

9. The cosmetic tool of claim 1, wherein the first regions have a protruding height which is 10 to 100% of thickness of the skin contact layer (110).

## Patentansprüche

1. Ein kosmetisches Werkzeug, umfassend:
eine Hautkontaktschicht (110), die ein kosmetisches Material absorbiert und das absorbierte kosmetische Material an eine Haut abgibt; und
eine elastische Schicht (120), die so ausgebildet ist, dass sie der Hautkontaktschicht (110) gegenüberliegt und die Hautkontaktschicht (110) durch physikalischen Druck von der Rückseite gegen die Haut drückt, wobei die elastische Schicht erste Bereiche mit einem ersten aufgebrachten Druck und zweite Bereiche mit einem zweiten aufgebrachten Druck, der niedriger ist als der erste aufgebrachte Druck, beinhaltet,
**dadurch gekennzeichnet, dass**
die ersten Bereiche verglichen mit den zweiten Bereichen zur Hautkontaktschicht (110) hin überstehen und
ein Abschnitt der Hautkontaktschicht (110), der den zweiten Bereichen entspricht, ein niedrigeres Absorptionsvermögen von kosmetischem Material aufweist als dessen Umgebung.

2. Das kosmetische Werkzeug nach Anspruch 1, wobei die Hautkontaktschicht (110) und die elastische Schicht (120) integral ausgebildet sind.

3. Das kosmetische Werkzeug nach Anspruch 1, wobei die Hautkontaktschicht (110) und die elastische Schicht (120) eine getrennte Schicht sind.

4. Das kosmetische Werkzeug nach Anspruch 1, wobei die ersten Bereiche und die zweiten Bereiche unterschiedliche thermische Historien aufweisen.

5. Das kosmetische Werkzeug nach Anspruch 1, wobei der Abschnitt der Hautkontaktschicht (110), der den zweiten Bereichen entspricht, wärmeblockiert ist.

6. Das kosmetische Werkzeug nach Anspruch 1, wobei die Hautkontaktschicht (110) einen Abschnitt aufweist, der den ersten Bereichen entspricht, und der Abschnitt dünner ist als dessen Umgebung.

7. Das kosmetische Werkzeug nach Anspruch 1, weiter umfassend ein bandförmiges Griffband (20), das auf der Rückseite der elastischen Schicht (120) angeordnet ist und es ermöglicht, dass die Finger eines Anwenders in die elastische Schicht (120) gesteckt und darin fixiert werden, wobei die ersten Bereiche derart ausgebildet sind, dass sie an einer Position, die den Fingern des Anwenders entspricht, eine niedrigere Dichte als deren Umgebung aufweisen.

8. Das kosmetische Werkzeug nach Anspruch 7, wobei sich die ersten Bereiche der Länge nach in einer Richtung senkrecht zur Richtung, in der sich das Griffband (20) erstreckt, erstrecke n.

9. Das kosmetische Werkzeug nach Anspruch 1, wobei die ersten Bereiche eine überstehende Höhe aufweisen, die 10 bis 100% der Dicke der Hautkontaktschicht (110) beträgt.

## Revendications

1. Outil cosmétique comprenant:
une couche de contact avec la peau (110) qui absorbe un matériau cosmétique et
délivre le matériau cosmétique absorbé à la peau ; et
une couche élastique (120) qui est formée de manière à faire face à la couche de contact avec la peau (110) et qui presse la couche de contact avec la peau (110) vers la peau conformément à une pression physique depuis le côté arrière, laquelle couche élastique contient des premières régions ayant une première pression appliquée et des deuxièmes régions ayant une deuxième pression appliquée qui est inférieure à la première pression appliquée, **caractérisé en ce que** les premières régions font saillie en direction de la couche de contact avec la peau (110) en comparaison avec les deuxièmes régions, et
une partie de la couche de contact avec la peau (110) correspondant aux deuxièmes régions a un pouvoir d'absorption de matériau cosmétique inférieur à celui de sa périphérie.

2. Outil cosmétique selon la revendication 1, dans lequel la couche de contact avec la peau (110) et la couche élastique (120) sont formées solidairement.

3. Outil cosmétique selon la revendication 1, dans lequel la couche de contact avec la peau (110) et la couche élastique (120) sont des couches séparées.

4. Outil cosmétique selon la revendication 1, dans lequel les premières régions et les deuxièmes régions ont des historiques thermiques différents.

5. Outil cosmétique selon la revendication 1, dans lequel la partie de la couche en contact avec la peau (110) correspondant aux deuxièmes régions est bloquée par de la chaleur.

6. Outil cosmétique selon la revendication 1, dans lequel la couche de contact avec la peau (110) a une partie correspondant aux premières régions et la partie est plus mince que sa périphérie.

7. Outil cosmétique selon la revendication 1, comprenant en outre une bande de poignée en forme de bande (20) qui est positionnée en arrière de la couche élastique (120), et qui permet à des doigts d'un utilisateur d'être insérés et fixés avec la couche élastique (120), dans lequel les premières régions sont formées de manière à avoir une densité inférieure à celle de leur périphérie en une position correspondant aux doigts de l'utilisateur.

8. Outil cosmétique selon la revendication 7, dans lequel les premières régions sont étendues dans le sens de la longueur dans une direction perpendiculaire à la direction d'extension de la bande de poignée (20).

9. Outil cosmétique selon la revendication 1, dans lequel les premières régions ont une hauteur saillante qui est de 10 à 100 % de l'épaisseur de la couche de contact avec la peau (110).
